# EUROPÄISCHE PATENTSCHRIFT

(11) **EP 0 765 979 B1**
(45) Veröffentlichungstag und Bekanntmachung des Hinweises auf die Patenterteilung: **02.12.1998**
(21) Anmeldenummer: 96112367.6
(22) Anmeldetag: 31.07.1996
(51) Int. Cl.: E04F 13/08, F16B 33/00

(54) **Befestigungselement für die Befestigung von wärmeisolierenden Materialien**
Fixing element for the fixation of heat insulant materials
Elément de fixation pour la fixation de matériaux isolants

(30) Priorität: 28.09.1995 DE 19536171
(43) Veröffentlichungstag der Anmeldung: 02.04.1997
(73) Patentinhaber: EJOT Kunststofftechnik GmbH & Co. KG, D-57319 Bad Berleburg (DE)
(72) Erfinder: Riecke, Ernst Hermann, Dipl.-Ing., D-57319 Bad Berleburg-Berghausen (DE)
(74) Vertreter: Geissler, Bernhard, Dr.

(56) Entgegenhaltungen:
- EP-A- 0 074 469
- DE-B- 2 843 050
- DE-U- 8 612 794

## Beschreibung

Die Erfindung betrifft ein Befestigungselement für die Befestigung von wärmeisolierenden Platten an einer Unterkonstruktion mit einem Kunststoffhalteteil und einem in dieses einzubringenden Stift. Das Halteteil besitzt eine Druckplatte, eine den Stift führende Hülse und eine Ausnehmung für die Aufnahme des Stiftkopfes.

Befestigungselemente zur Befestigung von wärmeisolierenden Platten, die häufig an Gebäudeaußenseiten befestigt werden, dürfen keine wärmeleitenden Brücken bilden, um die durch die Platten erzielte Wärmedämmung nicht zu beeinträchtigen. Hierfür, und insbesondere um eine Abdichtung des metallischen Spreizstiftes gegenüber Feuchtigkeit zu erreichen, wird in EP 0 074 469 ein Befestigungselement vorgestellt, das einen metallischen Spreizstift aufweist, dessen metallischer Kopf derart mit Kunststoff umhüllt ist, daß die mit Kunststoff beschichtete Unterseite des Stiftkopfes im eingeschlagenen Zustand die Hülse des Kunststoffhalteteils nach oben hin dichtend abschließt.

Durch eine meßtechnische Erfassung der durch Befestigungselemente verursachten Verluste bei der Wärmedämmung wurde festgestellt, daß die durch Befestigungselemente verursachten Verluste verhältnismäßig hoch sind, wenn die metallischen Spreizelemente nicht speziell isoliert werden. Zwar gelingt bereits dem Befestigungselement gemäß EP 0 074 469 eine deutliche Reduzierung dieser Verluste, jedoch sind weitere Verbesserungen wünschenswert.

Ein Ziel der vorliegenden Erfindung besteht darin, ein Befestigungselement so zu gestalten, daß Wärmebrücken wirksam vermieden und Verluste bei der Wärmedämmung eingedämmt werden.

Dieses Ziel wird durch die in den unabhängigen Ansprüchen angegebenen Merkmale gelöst. Zweckmäßige Weiterbildungen des Erfindungsgegenstands sind in den Unteransprüchen angegeben.

Erfindungsgemäß liegt nach dem Einbringen des Stiftes in das Halteteil der mit einem Kunststoffmantel gebildete Stiftkopf derart radial an der Innenwand der für den Stiftkopf vorgesehenen Ausnehmung an, daß in einem axialen Abstand von mindestens 5 mm von dem dem Kopf zugewandten Ende des metallischen Stiftkörpers eine obere radiale Abdichtung zwischen dem Stiftkopf und der Innenwand der Ausnehmung besteht.

Aufgrund der Anordnung einer Isolationszone über der Hülse für den Stiftschaft läßt sich die Bildung einer Kälte-Wärmebrücke, die durch den metallischen Stift begünstigt wird, wirksam unterdrücken. Der Stift kann dabei zum Einschlagen oder zum Einschrauben ausgestaltet sein. Da zur Erzielung der Isolationszone keine separaten zusätzlichen Teile in die Ausnehmung des Halteteils ein bzw. aufgesetzt werden müssen, erfolgt die Montage sehr zuverlässig und sicher.

Besonders günstig ist es, wenn zusätzlich, in einem axialen Abstand von mindestens 5 mm von der oberen radialen Abdichtung, eine untere radiale Abdichtung zwischen Stiftkopf und der Innenwand der Ausnehmung besteht.

In einer vorteilhaften Ausführungsform der Erfindung verschließt der Stiftkopf mit seiner Unterseite die Bohrung der Hülse für den Stiftschaft. Ferner kann ein Teil des Stiftschaftes im Anschluß an den Stiftkopf zusätzlich mit Kunststoff ummantelt sein, um eine zusätzliche radiale Abdichtung in der Hülse zu erzielen.

Zweckmäßigerweise weist der metallische Stift an einem Ende einen verbreiterten, metallischen, kopfartigen Abschluß auf, an dem ein Kunststoffkörper aufgebracht ist, der in axialer Richtung mindestens 5 mm vom Ende des metallischen Körpers abragt. Besitzt der metallische Stiftgrundkörper einen solchen verbreiterten Abschluß nicht, so kann eine ausreichende Festigkeit der Verbindung zwischen metallischem Stiftkörper und Kunststoffmantel bzw. -kopf dadurch geschaffen werden, daß der am metallischen Stift für die Befestigung der Kunststoffschicht vorgesehene Bereich mit einer Rändelung oder Kordelung versehen wird.

Bevorzugt wird zwischen der oberen und der unteren radialen Abdichtung mindestens ein isolierender Luftraum geschaffen. Damit können besonders kleine Kontaktflächen zwischen Stiftkopf und der Innenwand der Ausnehmung, also dem Halteteil, verwirklicht werden. Es können auch eine Vielzahl kleiner Lufttaschen geschaffen werden, wenn der Kunststoffmantel mit Poren versehen ist.

In einer weiteren vorteilhaften Ausführungsform besitzt der Kunststoffstiftkopf zwischen einer oberen und einer unteren radialen Abdichtung axiale Rippen. Alternativ oder zusätzlich kann eine oder mehrere radiale Rippen zwischen der oberen und unteren radialen Abdichtung vorgesehen sein. Damit werden Kammern geschaffen, die die Luftzirkulation zwischen der oberen und unteren radialen Abdichtung unterbrechen. Wegen der hiermit erzielten besonders hohen Isolierwirkung kann die Länge des Kunststoffkopfes bei gleicher Isolierwirkung kürzer gehalten werden, wodurch sich die Stabilität des Kopfes verbessert. Ferner trägt die Rippenstruktur zur Festigkeit des Stiftkopfes bei. Dies ist besonders für den Eintreibvorgang des Stiftes von Bedeutung.

Bevorzugt besitzt der Stiftkopf in axialer Richtung zwischen dem oberen Ende und dem metallischen Grundkörper einen mindestens 5 mm langen Abschnitt ohne Metallkern. Bevorzugt wird dieser Abschnitt ohne Metallkern in einer Länge von 8 mm bis 20 mm ausgeführt.

Stiftkopf und Innenwand der Ausnehmung, an der der Stiftkopf nach dem Einbringen des Stiftes in seine Endposition anliegt, können so ausgestaltet sein, daß im wesentlichen ein radiales Anliegen des Stiftkopfes an der Ausnehmung über seine gesamte axiale Länge erfolgt.

Vorteilhafterweise sind an der Außenwand der Ausnehmung zwischen der Druckplatte und der Hülse axiale Rippen angeordnet. Damit wird die Festigkeit der Wandung der Ausnehmung erhöht, wodurch sich infolge der höheren Steifigkeit auch eine bessere Abdichtung zwischen Stiftkopf und der Innenwand der Ausnehmung erzielen läßt.

Eine besonders hohe Isolierwirkung läßt sich erzielen, wenn die untere und die obere radiale Abdichtung zwischen Stiftkopf und Ausnehmung an den in axialer Richtung im wesentlichen äußersten Enden der Ausnehmung erfolgt. Vorteilhaft ist dabei, am Stiftkopf radiale Dichtungen in Form von schmalen, verformbaren Lippen, die ein geringes Übermaß gegenüber dem Durchmesser der Ausnehmung aufweisen, vorzusehen.

Diese Lippen können als ein um den gesamten Stiftkopf umlaufender Grat ausgebildet werden. Insbesondere, wenn die obere radiale Abdichtung am im wesentlichen äußersten (oberen) Ende der Ausnehmung erfolgt und die Oberfläche des Stiftkopfes im wesentlichen bündig mit der Druckplatte ist, reicht es für die obere radiale Abdichtung aus, wenn zwischen Stiftkopf und Ausnehmungsinnenwand ein minimaler Spalt verbleibt, der aber das Eindringen von Putz in die Ausnehmung verhindert. In Kombination mit der nachträglich aufgebrachten Putzschicht wird eine Konvektion wirksam unterbunden.

Weitere Vorteile, Merkmale und Anwendungsmöglichkeiten der vorliegenden Erfindung ergeben sich aus der nachfolgenden Beschreibung eines Ausführungsbeispiels in Verbindung mit der Zeichnung. Es zeigen
- Fig. 1: ein erfindungsgemäßes Befestigungselement vor dem vollständigen Einschlagen des Schlagstiftes;
- Fig. 2: das Befestigungselement nach dem vollständigen Einbringen des Stiftes;
- Fig. 3: den Stift mit einem Kopf, der mit einem Kunststoffmantel gebildet ist;
- Fig. 4: einen Schnitt durch den Stiftkopf gemäß Figur 3;
- Fig. 5: einen Schlagstift mit einer zusätzlichen radialen Rippe;
- Fig. 6: die Vorderansicht eines Stiftes, dessen Kopf für den Eingriff eines Schraubwerkzeugs ausgestaltet ist;
- Fig. 7: den Schnitt B-B durch Fig. 6; und
- Fig. 8: den Schnitt A-A durch Fig. 6.

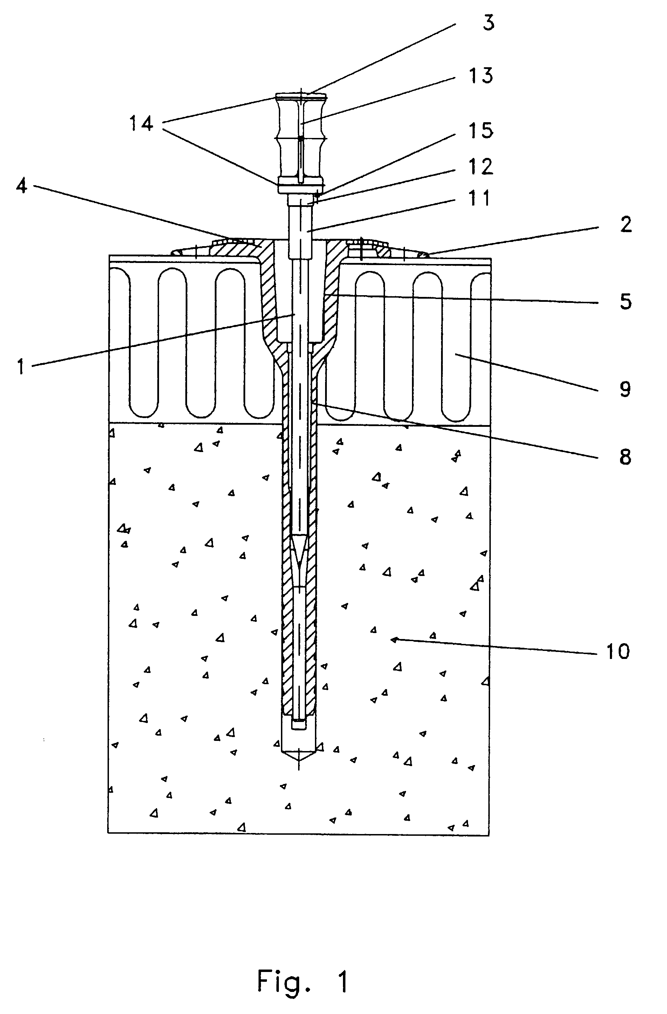

Fig. 1 zeigt das in eine Bohrung eingebrachte Halteteil 2 vor dem Einschlagen des Schlagstiftes 1. Das Halteteil weist eine Druckplatte 4, die auf einer Dämmplatte 9 anliegt, eine Ausnehmung mit Innenwand 5 zur Aufnahme des Stiftkopfes und eine Hülse 8 zur Verankerung in einer Unterkonstruktion auf, welche den Schaft des Stiftes 1 dann im eingeschlagenen Zustand umschließt.

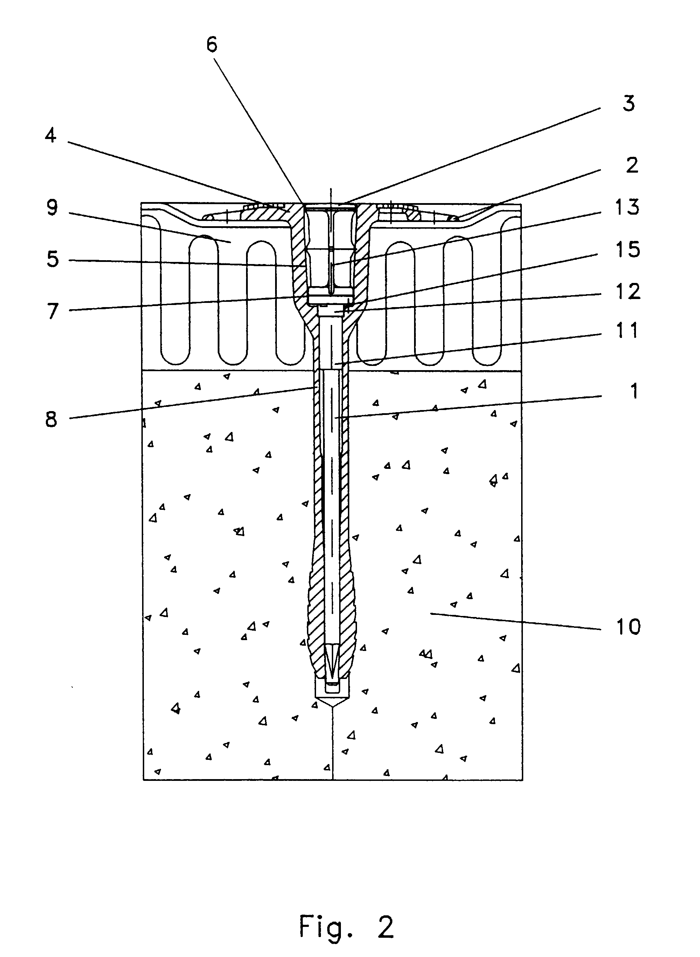

Der Stiftkopf 3 ist auf dem metallischen Kopf des metallischen Stiftgrundkörpers aufgebracht und verlängert diesen nach oben. Dieser Kunststoffmantel weist dabei jeweils am oberen und unteren Ende eine schmale Kunststofflippe 14 auf. Am Kopf schließt sich nach unten ein mit Kunststoff überzogener Bereich 11 an, der einen Absatz 12 aufweist. Dieser Bereich dient zur Abdichtung innerhalb der Hülse 8. An der Kopfunterseite sind insgesamt drei Noppen 15 angebracht, wodurch eine sehr kleine Anlagefläche gegenüber der Hülse 8 geschaffen wird. Somit wird zwischen der Hülse 8 und der unteren radialen Abdichtung 7 (in Fig. 2 dargestellt) ein isolierendes Luftpolster geschaffen, wenn der Stift vollständig in das Halteteil eingebracht ist.

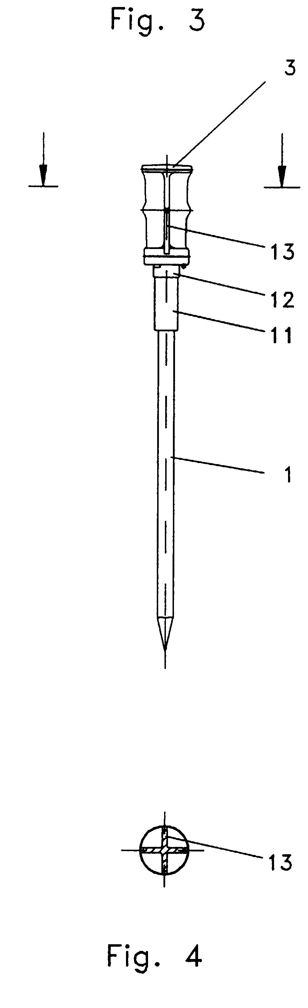

In Fig. 3 ist der Stift 1 wiedergegeben. Fig. 4 zeigt einen Schnitt durch den Stiftkopf 3 in der in Fig. 3 gekennzeichneten Schnittebene. Hieraus ist erkennbar, daß der Stiftkopf 3 lediglich am oberen und unteren Ende aus Vollmaterial (Kunststoff) besteht. Dazwischen sind vier Kunststoffrippen 13 angeordnet, die sich im Querschnitt kreuzförmig darstellen. Die Bereiche des Stiftkopfes, die aus Vollmaterial gebildet sind, dienen nach dem Einschlagen des Stiftes zur Abdichtung. Die Bereiche der Rippen 13 bilden dagegen isolierende Luftpolster.

Fig. 2 zeigt den in das Befestigungselement eingeschlagenen Stift 1. Der metallische Grundkörper des Stiftes spreizt den unteren Bereich der Hülse, wodurch eine Verankerung in der Unterkonstruktion 10 erzielt wird. An den oberen und unteren Enden des Stiftkopfes erfolgt jeweils eine radiale Abdichtung 6, 7 zwischen Stiftkopf 3 und der Innenwand 5 der Ausnehmung. Die Kunststoffunterseite des Stiftkopfes verschließt dabei die Hülse 8 bzw. die Ausnehmung für den Stiftkopf derart in axialer Richtung, also nach oben, daß das oben erwähnte Luftpolster aufgrund der drei Noppen 15 geschaffen wird. Auf diese Weise bestehen nur verhältnismäßig kleine Anlageflächen zwischen dem Halteteil 2 und dem Kopf 3. Es wird gleichsam eine thermische Trennung durch Luft und Kunststoff erzielt. Die Oberseite des Stiftkopfes schließt die Druckplatte im wesentlichen bündig ab, so daß Kopfoberseite und Oberseite der Druckplatte im wesentlichen eine Ebene bilden.

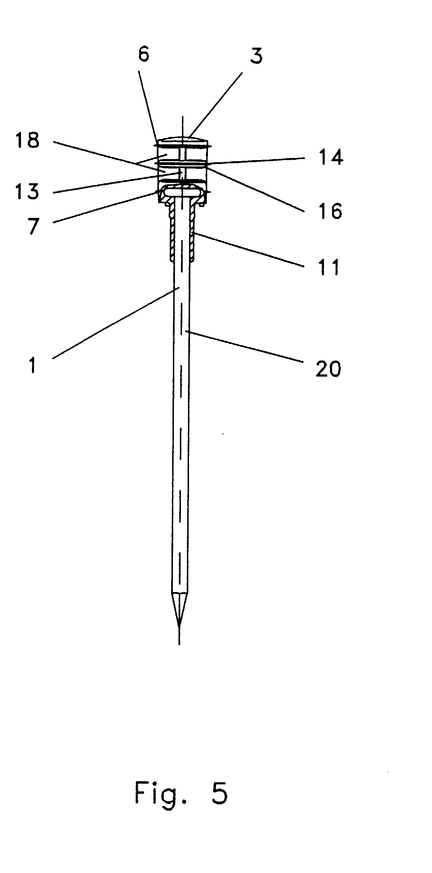

Fig. 5 zeigt einen Stift 1 der als Schlagstift ausgestaltet ist. Die Oberseite des Stiftkopfes 3 ist gewölbt und weist einen schmalen, flachen Rand auf, wodurch das zentrische Ansetzen einer Eintreibvorrichtung erleichtert wird. Ein auf den Stiftkopf wirkender Schlag wird zentriert.

Daneben besitzt der Stiftkopf, ähnlich wie in den Fig. 3 und 4 dargestellt, vier längs laufende axiale Kunststoffrippen 13. Zwischen der oberen radialen Abdichtung 6 und der unteren radialen Abdichtung 7 ist zusätzlich eine radiale Kunststoffrippe 16 angeordnet. Damit werden vier untere und vier obere Luftkammern zwischen dem Kopf 3 des eingeschlagenen Stiftes 1 und der Innenwand der Ausnehmung 5 geschaffen. Da eine Luftzirkulation zwischen den unteren Luftkammern, die dem metallischen Grundkörper des Stiftes 1 zugewandt sind, und den oberen Luftkammern, die der Kopfoberseite bzw. Schlagseite zugewandt sind, nicht stattfinden kann, ergibt sich eine besonders hohe Isolationswirkung. Damit kann der von dem metallischen Stiftkörper in axialer Richtung abragende Kunststoffmantel relativ kompakt gehalten werden. An den Stiftkopf 3 schließt sich am Schaft 20 ein Kunststoffüberzug 11 an, der zum Eingriff in die Hülse und zum Verschließen derselben bestimmt ist.

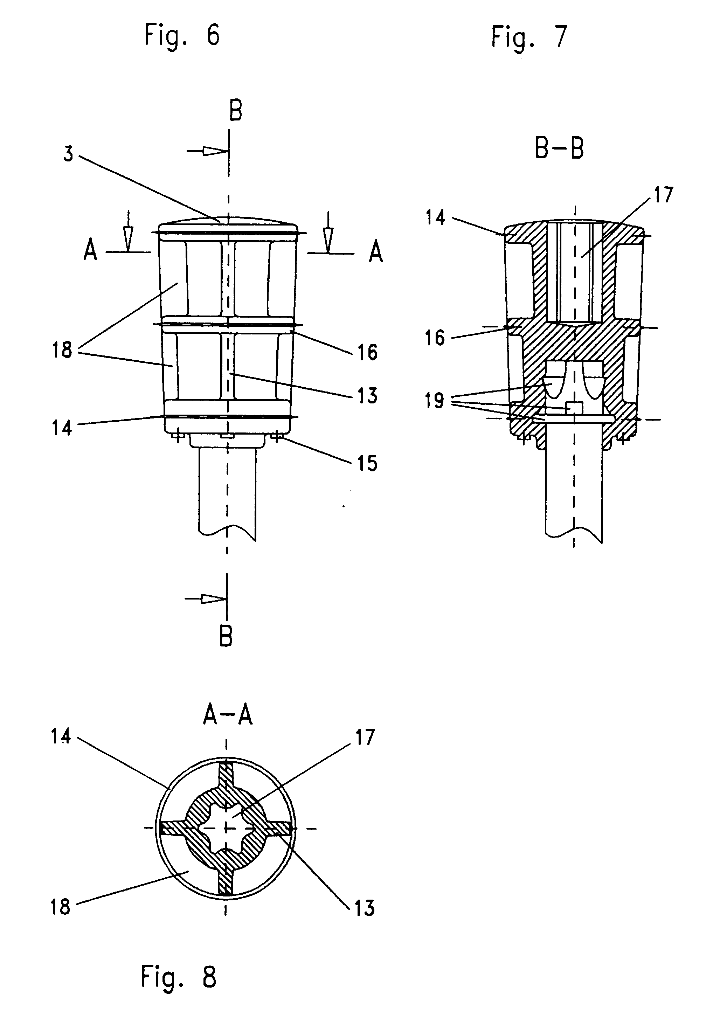

Fig. 6 stellt einen Stift 1 dar, dessen Kopf 3 für den Eingriff eines Schraubwerkzeugs speziell ausgebildet ist. Ebenso wie die Ausführungsform von Figur 5 weist der Stiftkopf eine mittlere radiale Rippe 16 und axial verlaufende Rippen 13 auf.

Wie in Fig. 7, dem Schnitt B-B durch Fig. 6 dargestellt ist, besitzt der Stiftkopf 3 eine Ausnehmung 17 im Kunststoffmantel, welche für den Eingriff eines Schraubwerkzeugs dient. Die axialen Rippen 13 sind in der Darstellung nicht geschnitten.

Der metallische Schaft des Stiftes 1 weist Fixierelemente 19 auf, die für den Halt des Kunststoffmantels sorgen. Dabei bewirken eine Bördelung und die dargestellten Nocken und Nute nicht nur einen guten Halt des Kunststoffmantels in axialer Richtung, sondern auch eine hohe Verdrehsicherheit.

Fig. 8 zeigt den Schnitt entlang A-A durch den Stiftkopf 3 von Fig. 3. Hierin sind ein Innenantrieb 17, axiale Kunststoffrippen 13, vier Luftkammern 18 und die Dichtlippe 14 der radialen Kunststoffrippe 16 erkennbar.

### Bezugszeichenliste

- 1: Stift
- 2: Halteteil
- 3: Stiftkopf
- 4: Druckplatte
- 5: Innenwand der Ausnehmung für Stiftkopf 3
- 6: obere radiale Abdichtung zwischen Stiftkopf und Ausnehmung
- 7: untere radiale Abdichtung
- 8: Hülse
- 9: Dämmplatte
- 10: Unterkonstruktion
- 11: Kunststoffüberzug
- 12: Kunststoffabsatz
- 13: axiale Kunststoffrippe
- 14: Kunststofflippe
- 15: Kunststoffnoppe
- 16: radiale Kunststoffrippe
- 17: Eingriffsöffnung im Stiftkopf 3
- 18: Luftkammer
- 19: Fixierelemente für Kunststoffummantelung
- 20: Schaft des Stiftes 1

## Patentansprüche

1. Befestigungselement für die Befestigung von wärmeisolierenden Platten an einer Unterkonstruktion, mit
einem Stift (1) mit metallischem Grundkörper und einem Kopf (3), der mit einem Kunststoffmantel gebildet ist,
einem Halteteil (2) aus Kunststoff, das eine Druckplatte (4), eine den Stift (1) führende Hülse (8) und eine zwischen Hülse (8) und Druckplatte (4) angeordnete Ausnehmung zur Aufnahme des Kopfes (3) nach dessen Einbringen aufweist,
**dadurch gekennzeichnet**, daß
der Kopf (3) nach Einbringen des Stiftes (1) in das Halteteil (2) derart radial an der Innenwand (5) der Ausnehmung anliegt, daß in einem axialen Abstand von mindestens 5 mm von dem dem Kopf zugewandten Ende des metallischen Stiftgrundkörpers eine obere radiale Abdichtung (6) zwischen dem Kopf (3) und der Innenwand (5) der Ausnehmung besteht.

2. Befestigungselement nach Anspruch 1, gekennzeichnet durch eine untere radiale Abdichtung (7) zwischen dem Kopf (3) und der Innenwand (5) der Ausnehmung.

3. Befestigungselement nach dem vorhergehenden Anspruch, dadurch gekennzeichnet, daß nach Einbringen des Stiftes (1) zwischen der unteren und der oberen radialen Abdichtung (7, 6) mindestens ein isolierender Hohlraum (18) gebildet ist.

4. Befestigungselement nach einem der vorhergehenden Ansprüche, dadurch gekennzeichnet, daß der mit einem Kunststoffmantel gebildete Kopf (3) eine Porenstruktur zur Ausbildung einer Vielzahl von Luftpolstern zwischen Kopf (3) und Innenwand (5) der Ausnehmung aufweist.

5. Befestigungselement nach einem der vorhergehenden Ansprüche, dadurch gekennzeichnet, daß der Kopf (3) im Bereich zwischen der oberen und der unteren Abdichtung (6, 7) axiale Rippen (13) aufweist.

6. Befestigungselement nach einem der vorhergehenden Ansprüche, dadurch gekennzeichnet, daß nach vollständigem Einbringen des Stiftes (1) zwischen Kopf (3) und der Innenwand (5) der Ausnehmung mindestens eine weitere radiale Abdichtung (16) zwischen der unteren und der oberen radialen Abdichtung (7, 6) besteht, die eine Trennung eines isolierenden Hohlraums (18) zwischen der unteren und oberen radialen Abdichtung (6, 7) herbeiführt.

7. Befestigungselement nach einem der vorhergehenden Ansprüche, dadurch gekennzeichnet, daß die Ausnehmung für den Stiftkopf (3) axiale Rippen aufweist.

8. Befestigungselement nach einem der vorhergehenden Ansprüche, dadurch gekennzeichnet, daß der Stift (1) in einem an dem Kopf (3) nach unten anschließenden Bereich mit einem Kunststoffüberzug (11) versehen ist.

9. Befestigungselement nach dem vorhergehenden Anspruch, dadurch gekennzeichnet, daß der Kunststoffüberzug (11) einen Absatz (12) aufweist.

10. Befestigungselement nach einem der vorhergehenden Ansprüche, dadurch gekennzeichnet, daß nach Einbringen des Stiftes (1) die Oberfläche des Kopfes (3) im wesentlichen bündig mit der Druckplatte (4) ist.

11. Befestigungselement nach einem der vorhergehenden Ansprüche, dadurch gekennzeichnet, daß die untere und die obere radiale Abdichtung (7, 6) an den in axialer Richtung im wesentlichen äußersten Enden der Ausnehmung erfolgt.

12. Befestigungselement nach einem der vorhergehenden Ansprüche, dadurch gekennzeichnet, daß nach dem Einbringen des Stiftes (1) ein Luftpolster zwischen der Unterseite des Kopfes (3) und der Hülse (8) gebildet ist.

13. Stift zum Einbringen in ein Halteteil (2) mit einer Druckplatte (4) und einer Ausnehmung, welcher einen Schaft (20) und einen Kopf (3) aufweist, der mit einem Kunststoffmantel gebildet ist,
**dadurch gekennzeichnet**, daß
der Kopf (3) nach Einbringen des Stiftes (1) in das Halteteil (2) derart radial an der Innenwand (5) der Ausnehmung anliegt, daß in einem axialen Abstand von mindestens 5 mm vom Schaft (20) eine obere radiale Abdichtung (6) zwischen dem Kopf (3) und der Innenwand (5) der Ausnehmung besteht.

14. Stift nach dem vorhergehenden Anspruch, für das Einbringen in ein Befestigungselement nach einem der vorhergehenden Ansprüche.

## Claims

1. Fixing element for the fixing of heatinsulating boards to a substructure, with a pin (1) having a metallic basic body and a head (3) which is formed with a plastic casing, and with a plastic holding part (2) which has a thrust plate (4), a sleeve (8) guiding the pin (1) and a recess for receiving the head (3) after the latter has been introduced, the said recess being arranged between the sleeve (8) and the thrust plate (4), characterized in that, after the pin (1) has been introduced into the holding part (2), the head (3) bears radially on the inner wall (5) of the recess, and in that, at an axial distance of at least 5 mm from that end of the metallic basic pin body which faces the head, there is upper radial sealing off (6) between the head (3) and the inner wall (5) of the recess.

2. Fixing element according to Claim 1, characterized by lower radial sealing off (7) between the head (3) and the inner wall (5) of the recess.

3. Fixing element according to the preceding claim, characterized in that, after the pin (1) has been introduced, at least one insulating cavity (18) is formed between the lower and the upper radial sealing off (7, 6).

4. Fixing element according to one of the preceding claims characterized in that the head (3) formed with a plastic casing has a pore structure for the formation of a multiplicity of air cushions between the head (3) and the inner wall (5) of the recess.

5. Fixing element according to one of the preceding claims, characterized in that the head (3) has axial ribs (13) in the region between the upper and the lower sealing off (6, 7).

6. Fixing element according to one of the preceding claims, characterized in that, after the pin (1) has been introduced completely between the head (3) and the inner wall (5) of the recess, there is, between the lower and the upper radial sealing off (7, 6), at least one further radial sealing off (16) which separates an insulating cavity (18) between the lower and the upper radial sealing off (6, 7).

7. Fixing element according to one of the preceding claims, characterized in that the recess for the pin head (3) has axial ribs.

8. Fixing element according to one of the preceding claims, characterized in that the pin (1) is provided with a plastic covering (11) in a region adjoining the head (3) in the downward direction.

9. Fixing element according to the preceding claim, characterized in that the plastic covering (11) has a shoulder (12).

10. Fixing element according to one of the preceding claims, characterized in that, after the pin (1) has been introduced, the surface of the head (3) is essentially flush with the thrust plate (4).

11. Fixing element according to one of the preceding claims, characterized in that the lower and the upper radial sealing off (7, 6) takes place at the ends of the recess which are essentially outermost in the axial direction.

12. Fixing element according to one of the preceding claims, characterized in that, after the pin (1) has been introduced, an air cushion is formed between the underside of the head (3) and the sleeve (8).

13. Pin to be introduced into a holding part (2) having a thrust plate (4) and a recess, the said pin having a shank (20) and a head (3) which is formed with a plastic casing, characterized in that, after the pin (1) has been introduced into the holding part (2), the head (3) bears radially on the inner wall (5) of the recess, in such a way that, at an axial distance of at least 5 mm from the shank (20), there is upper radial sealing off (6) between the head (3) and the inner wall (5) of the recess.

14. Pin according to the preceding claim, to be introduced into a fixing element according to one of the preceding claims.

## Revendications

1. Élément de fixation pour la fixation de panneaux d'isolation thermique à une structure sousjacente, comprenant un fût (1) à corps de base métallique et une tête (3) formée avec une enveloppe en matière plastique, une pièce de retenue (2) en matière plastique qui comporte une plaque de pression (4), un fourreau (8) pour guider le fût (1) et un évidement situé entre le fourreau (8) et la plaque de pression (4) pour recevoir la tête (3) une fois enfoncée, caractérisé en ce que, lorsque le fût (1) est introduit dans la pièce de retenue (2), la tête (3) est appliquée radialement contre la paroi intérieure (5) de l'évidement, de façon à créer, à une distance axiale d'au moins 5 mm de l'extrémité du corps de base métallique du fût tournée vers la tête, un joint supérieur radial étanche (6) entre la tête (3) et la paroi intérieure (5).

2. Élément de fixation selon la revendication 1, caractérisé par un joint inférieur radial étanche (7) entre la tête (3) et la paroi intérieure (5) de l'évidement.

3. Élément de fixation selon la revendication précédente, caractérisé en ce qu'après l'enfoncement du fût (1) au moins une cavité isolante (18) est formée entre les joints radiaux étanches inférieur et supérieur (7, 6).

4. Élément de fixation selon une des revendications précédentes, caractérisé en ce que la tête (3) formée avec une enveloppe en matière plastique possède une structure poreuse pour former une multitude de coussins d'air entre la tête (3) et la paroi intérieure (5) de l'évidement.

5. Élément de fixation selon une des revendications précédentes, caractérisé en ce que, dans la zone comprise entre les joints radiaux étanches supérieur et inférieur (6, 7), la tête (3) comporte des nervures axiales (13).

6. Élément de fixation selon une des revendications précédentes, caractérisé en ce que, lorsque le fût (1) est complètement enfoncé, il existe, entre la tête (3) et la paroi intérieure (5) de l'évidement, au moins un autre joint radial étanche (16) qui est situé entre les joints radiaux étanches inférieur et supérieur (7, 6) et qui divise la cavité isolante (18) formée entre les joints radiaux étanches inférieur et supérieur (6, 7).

7. Élément de fixation selon une des revendications précédentes, caractérisé en ce que l'évidement destiné à la tête de fût (3) comporte des nervures axiales.

8. Élément de fixation selon une des revendications précédentes, caractérisé en ce que le fût (1) est pourvu, dans une zone prolongeant la tête (3) vers le bas, d'un revêtement en matière plastique (11).

9. Élément de fixation selon la revendication précédente, caractérisé en ce que le revêtement en matière plastique (11) comporte un décrochement (12).

10. Élément de fixation selon une des revendications précédentes, caractérisé en ce que, une fois le fût (1) enfoncé, la surface de la tête (3) se trouve sensiblement au ras de la plaque de pression (4).

11. Élément de fixation selon une des revendications précédentes, caractérisé en ce que les joints radiaux étanches inférieur et supérieur (7, 6) se trouvent aux extrémités de l'évidement sensiblement les plus extérieures dans la direction axiale.

12. Élément de fixation selon une des revendications précédentes, caractérisé en ce que, une fois le fût (1) enfoncé, un coussin d'air est formé entre le dessous de la tête (3) et le fourreau (8).

13. Fût à enfoncer dans une pièce de retenue (2) comportant une plaque de pression (4) et un évidement, ledit fût comprenant une tige (20) et une tête (3) formée avec une enveloppe en matière plastique, caractérisé en ce que, une fois le fût (1) enfoncé dans la pièce de retenue (2), la tête (3) est plaquée radialement contre la paroi intérieure (5) de l'évidement, de façon à créer, à une distance axiale d'au moins 5 mm de la tige (20), un joint supérieur radial étanche (6) entre la tête (3) et la paroi intérieure (5) de l'évidement.

14. Fût selon la revendication précédente, destiné à être enfoncé dans un élément de fixation selon une des revendications précédentes.
